# DEMANDE DE BREVET EUROPEEN

(11) **EP 1 338 320 A1**
(43) Date de publication de la demande: **27.08.2003**
(21) Numéro de dépôt: 02405138.5
(22) Date de dépôt: 26.02.2002
(51) Int. Cl.: B01D 29/25, B01D 29/90

(54) **Filtre muni d'un élément réducteur de volume**

(71) Demandeur: Doucet MS Filtration, Succursale de Trélex, 1270 Trélex (CH)
(72) Inventeur: Moser, Charles - Henry, 1270 Trélex (CH)
(74) Mandataire: WILLIAM BLANC & CIE

(57) **Abrégé**

Le dispositif de filtre (2) comprend au moins une cartouche de filtre (22) fonctionnant par effet de surface et à nettoyage par balayage, montée de manière à définir un canal de purge (220). Un insert (26) est monté dans le canal de purge de manière à diminuer la section de passage du liquide de nettoyage dans le canal de purge, ceci afin de diminuer le débit de liquide de nettoyage nécessaire au nettoyage par balayage de la cartouche, tout en conservant une vitesse suffisante audit liquide de nettoyage pour un nettoyage efficace de la cartouche.

## Description

La présente invention concerne un dispositif de filtre fonctionnant par effet de surface et à nettoyage automatique et plus particulièrement à nettoyage par balayage.

A l'opposé des filtres à nettoyage par inversion de flux, appelés généralement Back Wash, les filtres à nettoyage par balayage ne nécessitent pas une inversion de flux pour leur nettoyage, avec l'avantage qu'ils ne nécessitent pas d'utiliser du liquide déjà filtré pour cette opération. De tels filtres sont déjà connus, notamment par les brevets CH 516 331 et 532 409, le premier de ces documents décrivant de manière générale le procédé de filtration par effet de surface à nettoyage par balayage, alors que le deuxième de ces documents décrit plus particulièrement le procédé de filtration faisant apparaître un anneau de filtration appelé anneau virtuel. Le brevet CH 597 894 décrit un filtre composé de plusieurs cartouches de filtration travaillant en parallèle, chacune d'entre elle possédant son propre dispositif de nettoyage par balayage, alors que le brevet CH 678 400 décrit un filtre du même type muni d'un dispositif à rotor permettant de commander individuellement le nettoyage de chaque cartouche. Les dispositifs décrits dans ces deux derniers documents sont de conception assez compliquée, comprenant pour le premier plusieurs sorties de purge, chacune comprenant sa propre vanne de purge, le dispositif comprenant en outre un dispositif de commande individuelle de chacune desdites vannes de purge, alors que si le dispositif du deuxième document ne comprend qu'une seule sortie de purge, les différentes cartouches sont raccordées à cette sortie par un collecteur de sortie de forme compliquée, comprenant en plus un rotor mobile de commande de purge.

Le brevet CH 686 763 obvie à ces inconvénients en prévoyant un filtre comprenant plusieurs cartouches et comportant un collecteur de sortie de forme assez simple, ne comportant qu'une seule sortie de purge et aucun élément mobile.

Les différents documents cités ci-dessus illustrent l'évolution de la technologie des filtres à effet de surface à nettoyage par balayage.

On peut maintenant considérer le problème de la perturbation apportée au débit de liquide ou d'eau filtrée immédiatement en aval du dispositif de filtration lors d'une opération de nettoyage.

Un nettoyage efficace du filtre nécessite de faire circuler l'eau à grande vitesse le long de la cartouche de filtre ; en conséquence, plus la surface de filtration est grande, respectivement plus le diamètre de la cartouche de filtre est grand, plus important sera le volume, respectivement le débit d'eau nécessaire pour ce nettoyage.

Par exemple, pour les filtres du type ne comprenant qu'une seule cartouche de filtration, comme décrits dans les brevets CH 516.331 et 532.409 ou pour les filtres comprenant plusieurs cartouches de filtration nettoyées simultanément comme décrits dans le brevet CH 686.763 on peut avoir, pour un débit déterminé à l'entrée du dispositif de filtration, une chute de pression, respectivement une variation de débit importante à la sortie du filtre lors d'un nettoyage de ce dernier. Cette variation de débit perturbe de manière notable et non admissible le réseau d'eau en aval du filtre.

Les dispositifs décrits dans les brevets CH 597.894 et 678.400 ne rencontrent pas l'inconvénient mentionné vu qu'une seule cartouche parmi plusieurs est nettoyée durant le fonctionnement en filtration des autres cartouches. Par contre les moyens permettant de sélectionner la cartouche à nettoyer sont coûteux et compliqués à mettre en oeuvre.

Le but de la présente invention est donc de proposer un dispositif de filtre à effet de surface et nettoyage par balayage amélioré relativement aux dispositifs de filtres connus.

Un autre but de l'invention est de proposer un dispositif de filtre à effet de surface et nettoyage par balayage dont l'influence perturbatrice sur le réseau aval lors d'un nettoyage soit diminuée.

Encore un autre but de l'invention est de proposer un dispositif de filtre à effet de surface et nettoyage par balayage qui soit simple de réalisation, facile à mettre en oeuvre et fiable d'utilisation.

Encore un autre but de l'invention est de proposer un dispositif de filtre pouvant facilement être intercalé dans une conduite existante.

Ces différents buts sont obtenus par un dispositif de filtre à effet de surface et nettoyage par balayage tel que décrit dans la revendication 1, des formes d'exécution particulières ou des variantes étant décrites dans les revendications dépendantes.

L'invention sera mieux comprise à la lecture de la description ci-dessous qui est à considérer en regard du dessin annexé comportant les figures où :
la figure 1 représente une coupe longitudinale d'une forme d'exécution préférentielle d'un dispositif de filtre selon l'invention ; et
les figures 2A, 2B et 2C représentent des variantes d'exécution d'un insert.

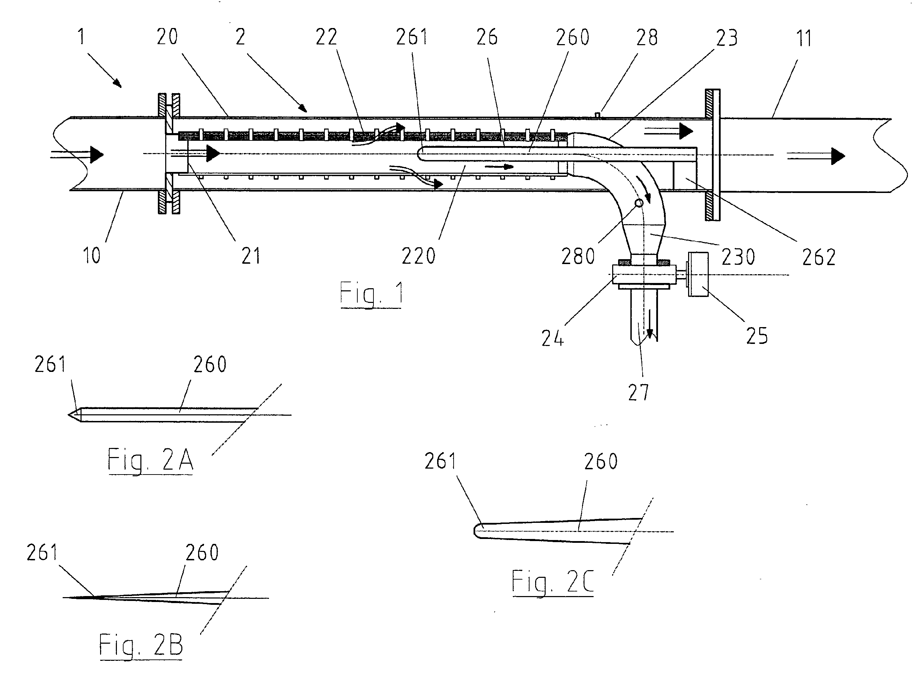

La conduite 1 de la figure 1 comprend une portion de conduite amont 10 et une portion de conduite aval 11, les deux dites portions comprenant entre elles un dispositif de filtre 2. Le dispositif de filtre 2 est fixé de manière connue aux deux portions 10 et 11 par des flasques vissées entre elles.

Le dispositif de filtre 2 comprend un tube extérieur 20, une douille d'entrée 21 maintenant une extrémité d'une cartouche de filtre 22 et, dans cette forme d'exécution, canalisant le liquide à filtrer à l'intérieur de la cartouche de filtre 22. L'autre extrémité de la cartouche de filtre 22 est fixée à un coude de purge 23, traversant de manière étanche le tube extérieur 20. Le dispositif de filtre comprend en outre une vanne 24, commandée de manière connue par un servomoteur 25 hydraulique ou électromécanique permettant d'activer le nettoyage par balayage de la cartouche de filtre 22.

En position de filtrage, le liquide à filtrer, respectivement l'eau, s'écoule dans le sens indiqué par les doubles flèches, soit passant depuis l'amont, de l'intérieure de la cartouche de filtre 22, à travers celle-ci vers l'extérieur de ladite cartouche pour s'écouler vers la portion de conduite 11. En position de nettoyage, le liquide de nettoyage ne traverse pas la paroi de la cartouche 22 mais s'écoule, comme indiqué par les flèches simples, par le canal de purge 220 vers le coude de purge 23 et la canalisation d'évacuation 27.

Sans autres éléments, l'ouverture de la vanne 24 afin de nettoyer l'élément de filtre 22 ne laisserait dans la conduite 11 en aval du dispositif de filtre 2 qu'un débit résiduel, ce qui est généralement insuffisant.

Afin de remédier à ceci, le dispositif de filtre selon l'invention propose de réduire la section de passage du liquide de nettoyage à l'intérieur du canal de purge 220, ce qui, pour une vitesse de balayage donnée permettant un balayage ou nettoyage efficace, diminue la quantité de liquide nécessaire à cet effet. Dans la forme d'exécution préférentielle représentée à la figure 1, cette diminution de section est obtenue par l'introduction d'un insert 26 à l'intérieur de la cartouche de filtre 22, respectivement à l'intérieur du canal de purge 220.

L'insert 26, ayant par exemple une section droite valant la moitié de la section droite du canal de purge 220, réduira en conséquence d'une moitié la quantité ou le débit de liquide nécessaire au nettoyage par balayage de la cartouche de filtre, diminuant ainsi l'impact de ce nettoyage sur le débit mesuré en aval du dispositif de filtre 2. De manière générale, la section de l'insert sera choisie pour valoir entre 5 % et 80 % de celle du canal de purge 220. On remarque à cet effet que le coude de purge 23 peut être suivi d'une réduction 230 puis d'une conduite d'évacuation de purge 27 de section plus faible que la section du canal de purge 220.

Selon la première variante de forme représentée à la figure 1, l'insert 26 comprend un corps 260 de forme cylindrique et une tête 261 de forme hémisphérique. La fixation de l'insert 26 dans l'élément de filtre est réalisée ici en faisant traverser de manière étanche la paroi du coude de purge 23 par le corps 260 et à fixer la portion d'extrémité arrière dudit corps par une ou des pièces de fixation 262 au tube extérieur 20 du dispositif de filtre 2. Tout autre mode de fixation d'un insert à l'intérieur d'une cartouche de filtre peut aussi être envisagé.

La tête 261 et le corps 260 de l'insert 26 sont de forme régulière, ici cylindrique, de manière à ne pas perturber l'écoulement laminaire du liquide dans le canal de purge 220. L'insert 26 peut être creux ou plein.

La longueur de l'insert à l'intérieur de la cartouche de filtre est choisie de manière à ce que son action s'étende sur la partie la plus active de la cartouche de filtre, de manière à ne pas perturber la création de l'anneau virtuel de filtration mentionné précédemment. De préférence, et en comptant depuis l'extrémité en aval de la cartouche de filtre 22, la longueur de l'insert 26 à l'intérieur de ladite cartouche de filtre sera comprise entre 20 % et 80 % de la longueur de ladite cartouche de filtre, se situant de préférence entre 40 % et 60 % de cette longueur.

Deux piquages 28 et 280 permettent une mesure de pression différentielle des deux côtés de la cartouche de filtre, permettant ainsi de mesurer son degré de colmatage et de commander l'ouverture de la vanne de purge 24 pour le nettoyage de la cartouche.

La figure 2A montre un insert 26 dont la tête 261 est de forme conique sur un corps 260 de forme cylindrique, la figure 2B montre un insert 26 dont la tête 261 et le corps 260 sont de forme conique alors que la figure 2C monte une tête 261 de forme hémisphérique sur un corps 260 conique. D'autres formes de la tête, respectivement du corps de l'insert peuvent encore être envisagées,

A côté des variantes et formes d'exécution décrites ci-dessus pour un dispositif de filtre 2 muni d'une seule cartouche filtrante 22, l'homme du métier saura adapter les constructions proposées à un dispositif de filtre comportant plusieurs cartouches fonctionnant en parallèle. De même, la cartouche 22 représentée en une seule pièce peut en fait être constituée de plusieurs portions successives de finesse de filtration différentes. De même, le dispositif de filtre selon l'invention peut aussi être équipé d'une cartouche dont la finesse de filtration varie de manière continue sur sa longueur.

Le dispositif filtre tel que proposé ici répond entièrement aux buts fixés, à savoir une économie d'eau de nettoyage, respectivement un impact sur le débit en aval nettement diminué, la construction et le fonctionnement de ce dispositif de filtre étant très simples. Le dispositif proposé peut par ailleurs facilement être intercalé dans une conduite existante.

## Revendications

1. Dispositif de filtre (2) à effet de surface à nettoyage par balayage comprenant au moins une cartouche de filtre (22) fixée à l'intérieur d'un tube d'enveloppe extérieure (20), et définissant un canal de purge (220), **caractérisé en ce que** le canal de purge (220) est muni d'un insert (26) limitant la section de passage du liquide de purge par ledit canal de purge.

2. Dispositif de filtre selon la revendication 1, **caractérisé en ce que** la cartouche de filtre (22) est de forme cylindrique tubulaire, ledit canal de purge (220) étant formé à l'intérieur de ladite cartouche de filtre, l'insert (26) étant constitué d'un élément longiligne (260,261) disposé essentiellement coaxialement dans la portion aval du canal de purge (220).

3. Dispositif de filtre selon la revendication 2, **caractérisé en ce que** l'insert (26) est constitué d'un corps (260) et d'une tête (261), la tête étant dirigée vers l'orifice d'entrée du filtre.

4. Dispositif de filtre selon la revendication 3, **caractérisé en ce que** la section longitudinale du corps de l'insert (260) est de forme rectangulaire.

5. Dispositif de filtre selon la revendication 3, **caractérisé en ce que** la section longitudinale du corps de l'insert (260) est de forme triangulaire.

6. Dispositif de filtre selon la revendication 3, **caractérisé en ce que** la section longitudinale de la tête (261) de l'insert est de forme triangulaire

7. Dispositif de filtre selon la revendication 3 **caractérisé en ce que** la section longitudinale de la tête (261) est de forme d'un secteur circulaire.

8. Dispositif de filtre selon l'une des revendications précédentes, **caractérisé en ce que** la restriction de section de l'insert dans le canal de purge est comprise entre 5 % et 80 % de la section dudit canal de purge.

9. Dispositif de filtre selon l'une des revendications précédentes, **caractérisé en ce que** la distance entre la tête de l'insert et l'extrémité en aval de l'élément de filtre est comprise entre 20 % et 80 % de la longueur de l'élément de filtre.

10. Dispositif de filtre selon l'une des revendications précédentes, **caractérisé en ce que** la distance entre la tête de l'insert et l'extrémité en aval de l'élément de filtre est comprise entre 40 % et 60 % de la longueur de l'élément de filtre.
